# EUROPEAN PATENT APPLICATION

(11) **EP 3 509 045 A1**
(43) Date of publication of application: **10.07.2019**
(21) Application number: 17846141.4
(22) Date of filing: 16.08.2017
(51) Int. Cl.: G07G 1/12, G07G 1/00

(54) **ACCOUNT PROCESSING SYSTEM AND RECORDING MEDIUM HAVING RECORDED THEREON CONTROL PROGRAM**

(30) Priority: 05.09.2016 JP 2016172711
(71) Applicant: Recruit Co., Ltd., Chuo-ku Tokyo 1040061 (JP)
(72) Inventor: NAGASHIMA, Takeshi, Tokyo 100-6640 (JP)
(74) Representative: EIP
(86) International application number: PCT/JP2017/029465
(87) International publication number: WO 2018/043133

(57) **Abstract**

An amount likely to be paid by a customer is estimated from a total amount, and the estimated amount is presented to a cashier as a candidate payment amount, so that the cashier selects a candidate payment amount in coincidence with the amount paid by the customer. A POS management server 100 includes a total amount computing unit 110 and a candidate payment amount estimating unit 120. The total amount computing unit 110 searches a goods database 200 using barcode information transmitted from a POS register terminal 300 as a search key and thus adds up the prices of all the items corresponding to the barcode information to obtain a total amount. The candidate payment amount estimating unit 120 estimates at least one amount likely to be paid by the customer from the obtained total amount, and transmits the estimated amount as a candidate payment amount to the POS register terminal 300.

## Description

### Cross-Reference to Related Application

This application is based on Japanese Patent Application No. 2016-172711, filed September 5, 2016, the content of which is incorporated herein by reference in its entirety.

### Technical Field

The present invention relates to a technical aspect which enables quick checkout processing.

### Background Art

In a POS (Point-Of-Sale) checkout service using for example a tablet terminal, upon figuring out a purchase price for an ordered item (or a total amount), a customer prepares cash corresponding to the total amount and makes a payment to a cashier (a clerk). (Hereinafter, an amount paid to the casher will be referred to as a "payment amount.")

Upon visually checking the payment made by the customer, the cashier directly inputs the payment amount to the POS register terminal by ten-key operation using for example a touch panel and processes the payment (see Patent Document 1).

### Citation List

### Patent Document

Patent Document 1: Patent Publication JP-A-H09-223273

### Summary

However, it is cumbersome and time consuming to directly input a payment amount by ten-key operation.

With the foregoing in view, it is an object of the present invention to enable simple and quick checkout by estimating a candidate payment amount likely to be paid by a customer from a total amount instead of requesting a casher to directly input the payment amount, presenting the estimated amount to the cashier as a candidate payment amount, and suggesting selection of the candidate payment amount to the cashier.

A checkout processing system according to one aspect of the present invention presents a purchase price for an item to a customer while accepting input by a cashier of a payment amount by the customer for the purchase price and carries out checkout processing, and the system includes a computing unit which computes the purchase price, an estimating unit which estimates, according to the purchase price, at least one candidate payment amount likely to be paid by the customer, a display unit which displays the estimated candidate payment amount, an accepting unit which accepts input of selection of the candidate payment amount carried out by the cashier, and a checkout unit which carries out checkout processing on the basis of the purchase price and the input candidate payment amount.

Preferably, according to the aspect, the estimating unit estimates a plurality of candidate payment amounts likely to be paid by the customer in consideration of combinations of money, and the accepting unit accepts input of at least one of the candidate payment amounts selected by the cashier.

According to the aspect, in determining the candidate payment amount, the estimating unit preferably gives priority to a combination of money closer to the purchase price.

Preferably, according to the aspect, the system further includes a camera unit which captures an image of a combination of money paid for the purchase price by the customer and produces data on the captured money image, and the estimating unit estimates the candidate payment amount on the basis of the purchase price and the data on the captured money image.

Preferably, according to the aspect, the estimating unit estimates a plurality of the candidate payment amounts on the basis of the purchase price and the data on the captured money image and determines a candidate payment amount with highest possibility on the basis of a combination of money estimated from the data on the captured money image, and the display unit displays the candidate payment amount with the highest possibility in a different display manner from the rest of candidate payment amounts.

### Advantageous Effects of Invention

According to the invention, instead of requesting a cashier to directly input a payment amount, an amount likely to be paid by a customer is estimated from a total amount, and the estimated amount is presented to the cashier as a candidate payment amount to suggest selection of the candidate payment amount to the cashier, so that easy and quick checkout can be enabled.

### Brief Description of Drawings

Fig. 1 is a schematic view of a POS system according to an embodiment of the invention.
Fig. 2 is a view illustrating an exemplary display screen of a conventional POS register terminal.
Fig. 3A is a view illustrating an exemplary display screen of a POS register terminal according to the embodiment.
Fig. 3B is a view illustrating an exemplary display screen of the POS register terminal according to the embodiment.
Fig. 3C is a view illustrating an exemplary display screen of the POS register terminal according to the embodiment.
Fig. 4 is a block diagram illustrating a configuration of the POS register terminal.
Fig. 5 is a sequence diagram illustrating one-tap checkout processing.
Fig. 6 is a schematic diagram for illustrating a conversation between a customer making an order and a cashier.
Fig. 7 is a schematic diagram for illustrating an advantageous effect brought about by the one-tap checkout processing.
Fig. 8 is a block diagram illustrating a configuration of a POS register terminal according to a modification.
Fig. 9 is a sequence diagram illustrating one-tap checkout processing according to the modification.
Fig. 10 is a view illustrating an analysis result about money image data.
Fig. 11 is a view illustrating an exemplary display screen of a POS register terminal according to a modification.

### Description of Embodiments

Now, an embodiment of the present invention will be described in detail with reference to the accompanying drawings. Note that the same elements are designated by the same reference characters, and their description will not be repeated.

### A. Embodiment

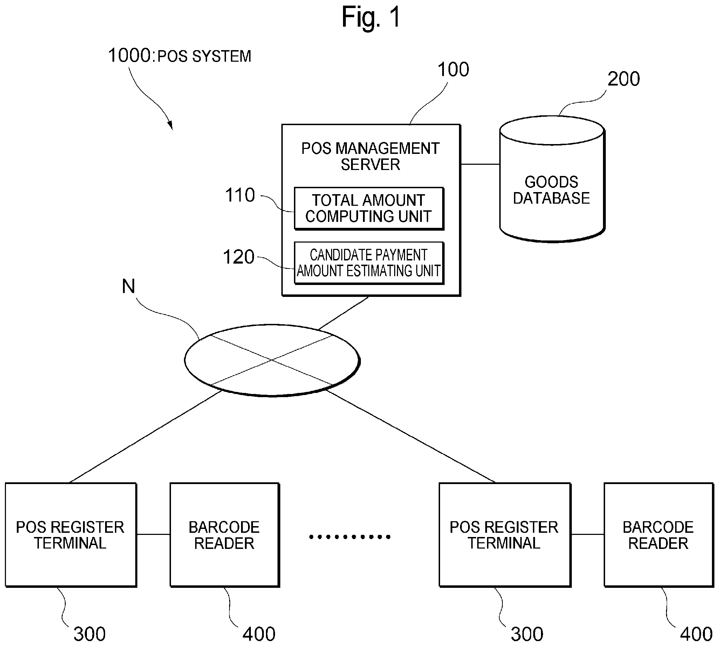

As shown in Fig. 1, a POS system (checkout system) 1000 includes a POS management server 100 which manages every kind of goods and services traded by a shop (hereinafter goods as well as services will collectively be referred to as the "goods"), a goods database (DB) 200 which stores detailed information on each of the goods, a POS register terminal 300 which includes a tablet terminal, and a barcode reader 400 which reads barcode tags attached on goods or a menu. According to the embodiment, a plurality of POS register terminals 300 and barcode readers 400 are provided at a certain shop (a restaurant A) by way of illustration, while only a single POS register terminal 300 and a single barcode reader 400 may be provided. More than one shop may be managed by the POS management server 100.

The POS management server 100 includes a server computer including a CPU, a ROM, and a RAM and manages every kind of goods traded by the shop and the POS terminals 300 in an integrated manner. The POS management server 100 executes a control program stored in the ROM, etc. to implement a total amount computing unit 110 and a candidate payment amount estimating unit 120.

The total amount computing unit (computing unit) 110 searches the goods database 200 using barcode information transmitted from the POS register terminal 300 as a search key and thus reads out detailed information such as the price and name of the item corresponding to the barcode information, adds up all the prices of the items for which the detailed information is read out to obtain a purchase price for the items (or the total amount).

The candidate payment amount estimating unit (estimating unit) 120 estimates at least one amount a customer may pay (an amount likely to be paid by the customer) from the obtained total amount, and transmits the result as a candidate payment amount to the POS register terminal 300.

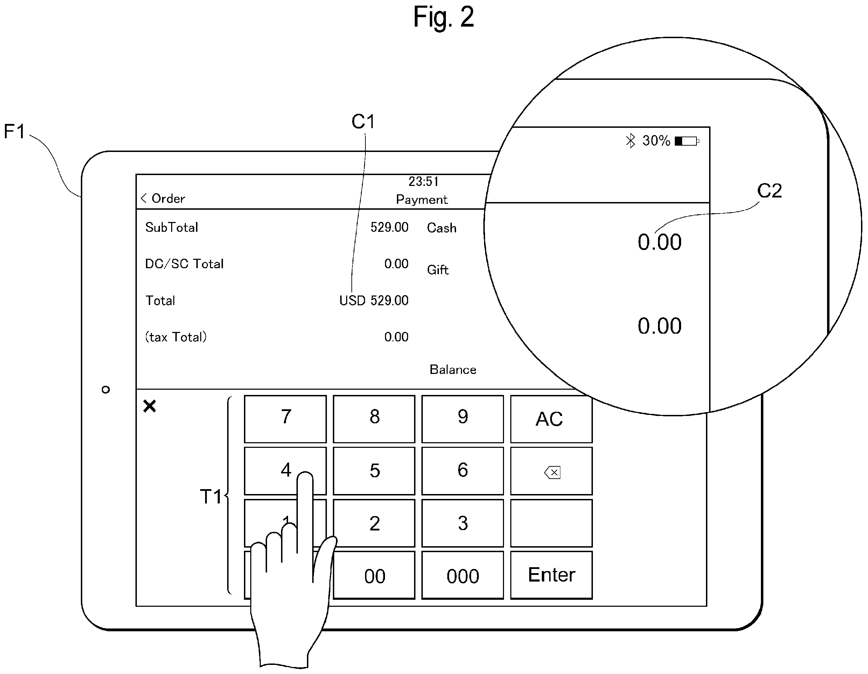

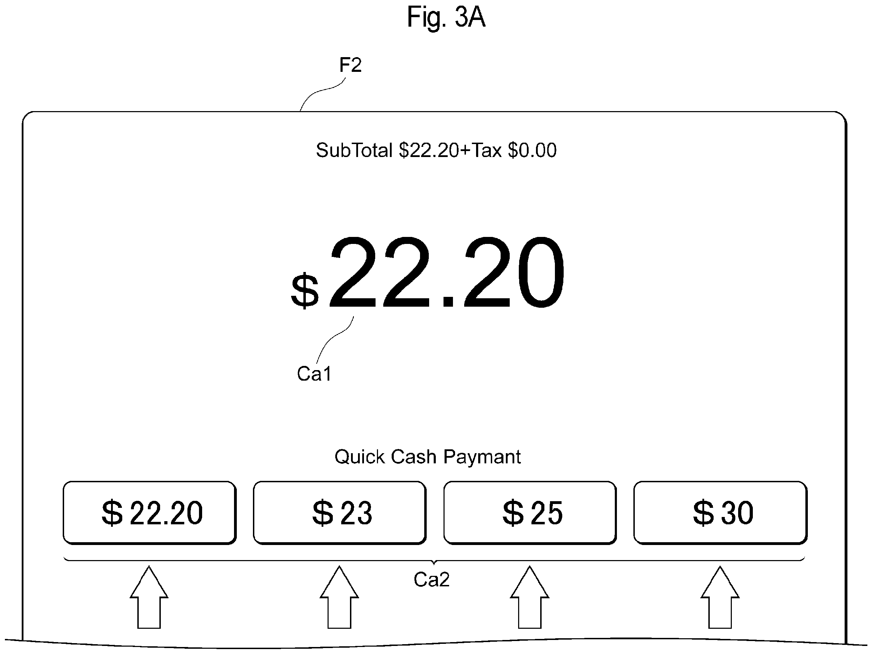

Fig. 2 is a view illustrating an exemplary display screen F1 of a conventional POS register terminal, and Figs. 3A to 3C are views illustrating an exemplary display screen F2 of the POS register terminal 300 according to the embodiment.

As shown in Fig. 2, a space C1 for indicating a total amount is displayed at the upper left part of the display screen F1 of the conventional POS register terminal, while a space C2 for indicating an amount paid by a customer (or the "payment amount") to the cashier is displayed at the upper right part of the display screen F1. The customer prepares and hands cash corresponding to the total amount, and the cashier visually checks the payment amount by the customer and directly inputs the payment amount using the ten-key part T1 of the POS register terminal. For example as shown in Fig. 2, when the total amount is "USD 529.00" and the customer hands "USD 540.00," the cashier should visually check the amount of money paid by the customer and input "USD 540.00" using the ten-key part T1 of the POS register terminal by, which is a time consuming work.

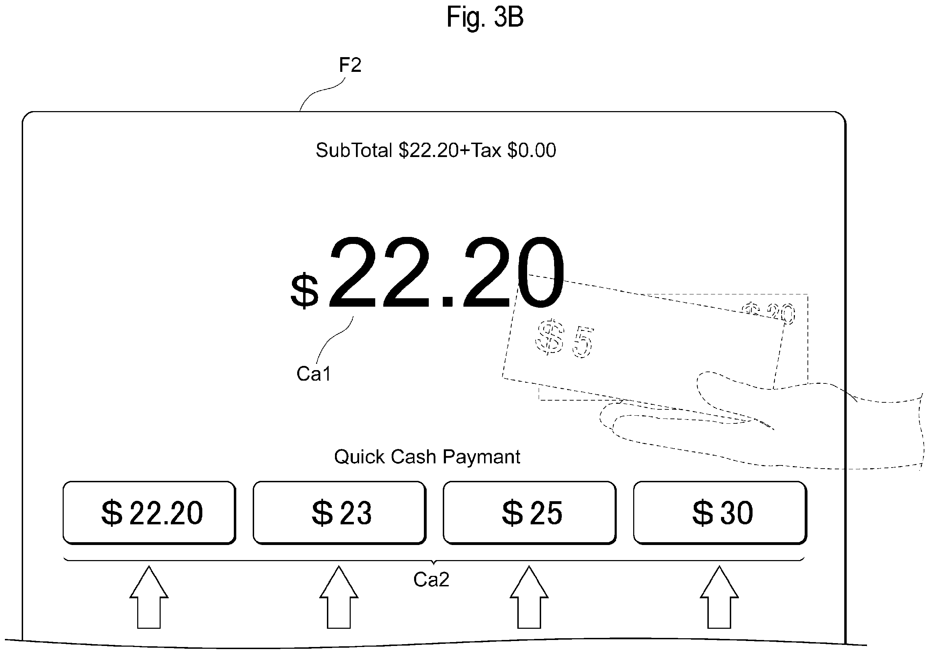

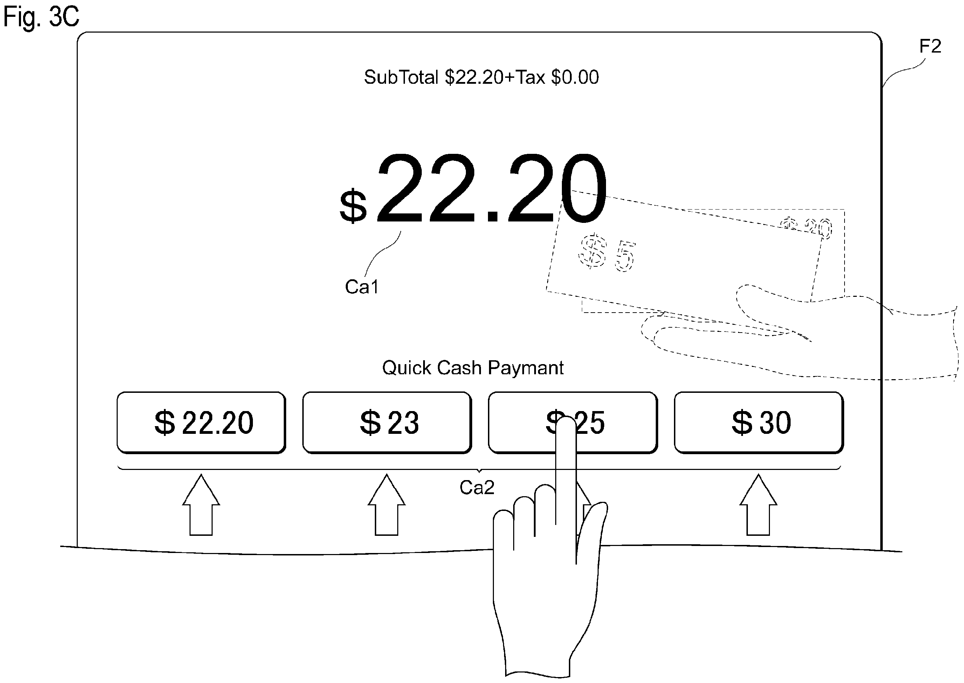

Meanwhile, as shown in Fig. 3A, a space Ca1 for indicating a total amount is displayed at the upper part of the display screen (display unit) F2 of the POS register terminal 300 according to the embodiment, and multiple spaces Ca2 for indicating amounts likely to be paid by the customer (i.e., candidate payment amounts) on the basis of the total amount are indicated at the lower part of the display screen F2. The customer prepares and pays cash according to the total amount, while the cashier roughly checks a combination of a bill(s) and/or a coin(s) paid by the customer, and then selects and taps a candidate payment amount in coincidence with the amount handed by the customer. For example, as shown in Fig. 3A, upon recognizing that the customer has handed two bills (a 20-dollar bill + a five-dollar bill) for a "USD 22.20" purchase (see Fig. 3B), the cashier selects "USD 25.00" (= a 20-dollar bill + a five-dollar bill) as a payment amount and taps the "USD 25" (see Fig. 3C). The POS register terminal 300 subtracts the total amount from the tapped candidate payment amount and indicates the obtained change. Upon checking the change, the cashier ends the checkout processing by giving the change to the customer.

In this manner, according to the embodiment, when the customer makes a payment for the total amount, the cashier can select (tap) one of the plurality of candidate payment amounts to enable simple and quick checkout (hereinafter also as the "one-tap checkout") without directly inputting the payment amount by the customer.

Referring back to Fig. 1, the goods database 200 stores prices, names, inventory situations, etc. for all the goods traded at the shop in association with bar code information.

The communication network N includes a communication network which allows the POS management server 100 and the POS register terminal 300 to transmit/receive information between each other. The communication network N may be the Internet, a LAN, a dedicated line, a telephone line, an intra-company network, a mobile communication network, Bluetooth®, WiFi (Wireless Fidelity), any of other communication lines, and a communication thereof, either wirelessly or through a wire.

The POS register terminal 300 is provided at a shop (the restaurant A according to the embodiment) which provides goods to indicate for example the price of each item to be purchased by a customer, a total amount for all the items to be purchased, and amounts of money likely to be paid by the customer (i.e., candidate payment amounts) from the obtained total amount. The POS register terminal 300 is provided for example in the vicinity of a cash register counter where a casher (clerk) stands by.

Note that according to the embodiment, it is assumed that the POS register terminal 300 is a tablet terminal, while the terminal may be any other terminal device such as a personal computer (PC), a notebook PC, a smartphone, a cell phone, and a personal digital assistant (PDA) which is capable of exchanging data with the POS management server 100 through the communication network N.

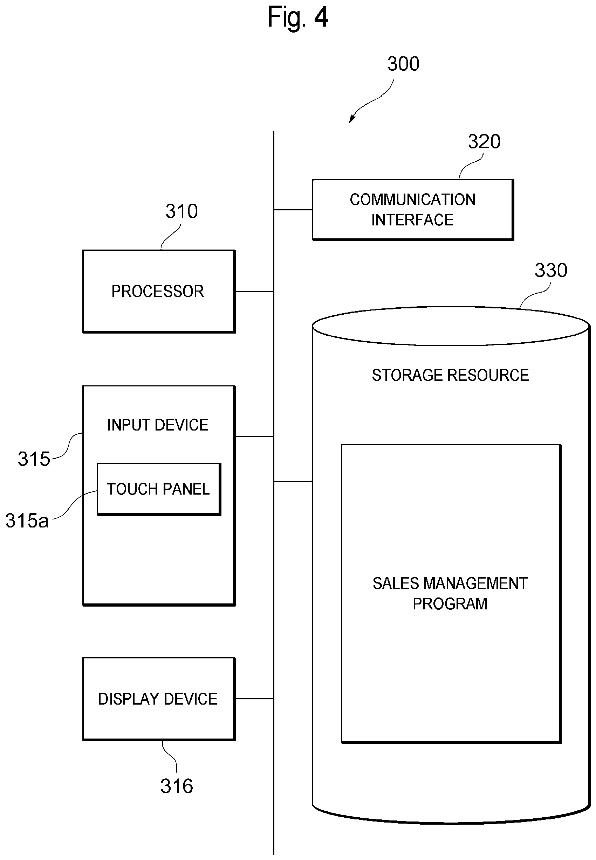

Fig. 4 is a block diagram illustrating a main structure of the POS register terminal 300. The POS register terminal 300 includes a processor 310, an input device 315, a display device 316, a communication interface 320, and a storage resource 330. As described above, the cashier operates, as appropriate, the input device 315 such as a touch panel provided at the POS register terminal 300 to find a candidate payment amount in coincidence with the amount of money paid by a customer among a plurality of displayed candidate payment amounts and taps the candidate payment amount to achieve one-tap checkout.

The processor 310 includes an arithmetic logic unit (such as a CPU) which processes arithmetic operation, logical operation, and bit operation and various registers and centrically controls various parts of the POS register terminal 300 by executing various programs stored in the storage resource 330. The various registers may include a program counter, a data register, an instruction register, and a general-purpose register.

The input device (accepting unit) 315 includes a touch panel 315a for accepting selection of a candidate payment amount.

The display device (display unit) 316 is a device configured to display a screen (suggesting screen) which suggests selection of a candidate payment amount and may include a liquid crystal display.

The communication interface 320 is a hardware module connected to the communication network N to allow communication with any of other terminals over the communication network N. The communication interface 320 is a modulation/demodulation device such as an ISDN modem, an ADSL modem, a cable modem, an optical modem, and a software modem.

The storage resource 330 is a logical device provided by the storage region of a physical device. The physical device is for example a computer-readable storage medium such as a disk drive and a semiconductor memory (such as a ROM and a RAM). The storage resource 330 may be configured as one logical device mapped with a plurality of physical devices or as a plurality of logic devices mapped with one physical device.

The storage resource 330 may store an operating system program, driver programs, and various kinds of data. The driver program is for example a communication interface driver program for controlling the communication interface 320. The storage resource 330 stores, in addition to the various programs and various data, a sales management program which is executed by the processor (checkout unit) 310 to implement checkout processing (such as change settlement) on the basis of a purchase price for an item and a candidate payment amount input by the cashier in cooperation with the POS management server 100.

Now, the operation in the one-tap checkout processing carried out when a customer purchases an item at the restaurant A will be described.

### <One-tap Checkout Processing>

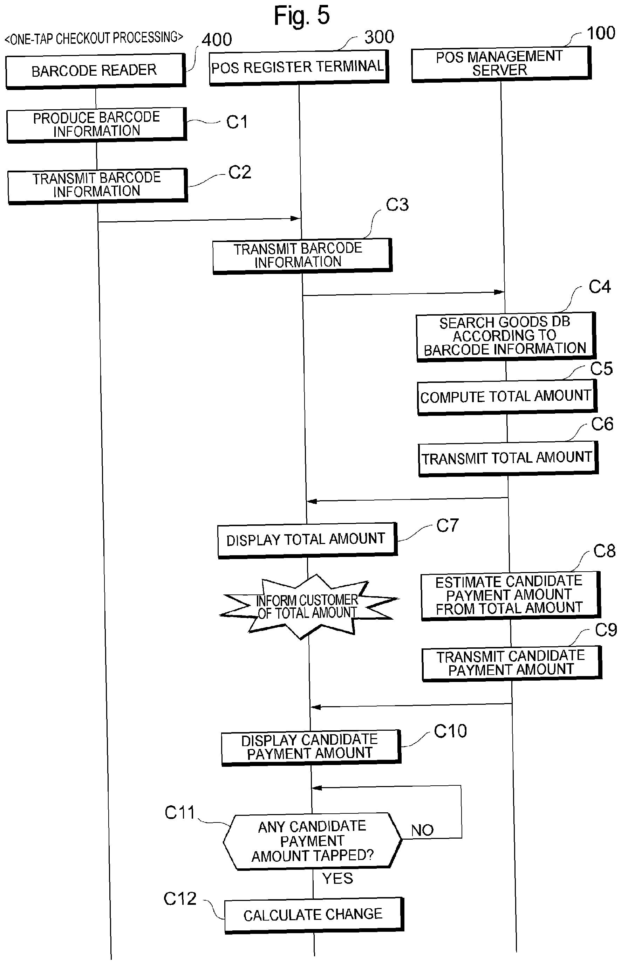

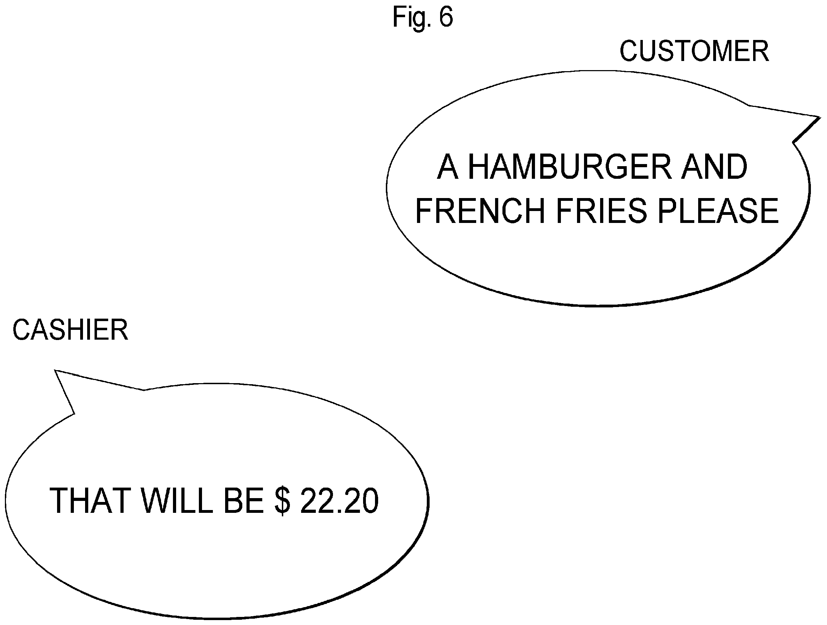

Fig. 5 is a sequence diagram illustrating one-tap checkout processing, and Fig. 6 is a schematic view for illustrating a conversation between the customer making an order and the cashier. When the customer orders a hamburger and French fries at the restaurant A, the cashier scans barcodes corresponding to a hamburger and French fries listed in the menu using a barcode reader 400. The barcode reader 400 produces barcode information in response to the barcode scanning operation (C1). The barcode reader 400 transmits the read barcode information to the POS register terminal 300 (C2). The POS register terminal 300 further transmits the barcode information to the POS management server 100 over the communication network N (C3).

The total amount computing unit 110 of the POS management server 100 searches the goods database 200 using the barcode information transmitted from the POS register terminal 300 as a search key (C4), reads out detailed information such as the prices and the names of the items (the "hamburger" and the "French fries" in this example) corresponding to the barcode information, and adds up the prices of all the items for which the detailed information has been read out to obtain the total amount (the total amount: "USD 22.20") (C5). Then, the total amount computing unit 110 of the POS management server 100 transmits the obtained total amount to the POS register terminal 300 (C6). The POS register terminal 300 displays the received total amount on the display device 316 (C7). The cashier informs the customer of the total amount "USD 22.20" by referring to the display screen F2.

Then, the candidate payment amount estimating unit 120 of the POS management server 100 estimates at least one amount likely to be paid by the customer (an amount obtained as a combination of bill(s) and/or coin(s)) from the obtained total amount (which is "USD 22.20" in this example) (C8). More specifically, when the total amount is "USD 22.20," the candidate payment amount estimating unit 120 obtains four candidate payment amounts, "USD 22.20," "USD 23," "USD 25," and "USD 30." The POS management server 100 returns the obtained four candidate payment amounts to the POS register terminal 300 (C9). The POS register terminal 300 displays the received four candidate payment amounts on the display device 316 (C10).

As a result, as shown in Fig. 3A, the total amount "USD 22.20" is indicated in the space Ca1 at the upper part of the display screen F2, while the four candidate payment amounts "USD 22.20," "USD 23," "USD 25," and "USD 30" are indicated in the space Ca2 at the lower part of the display screen F2. The customer prepares an amount of money in cash corresponding to the total amount (stated differently, an amount of money enough for the payment of the total amount) and makes a payment in response to the request by the cashier. The casher roughly checks a combination of bill(s) and/or coin(s) handed by the customer and selects and taps a candidate payment amount in coincidence with the payment amount by the customer. As shown in Fig. 3B, upon recognizing that the customer has handed two bills (a 20-dollar bill + a five-dollar bill) for "USD 22.20," the cashier selects and taps the "USD 25" as a candidate payment amount. Upon detecting the tapping on the candidate payment amount "USD 25" (Yes in C11), the POS register terminal 300 subtracts the total amount from the tapped candidate payment amount to obtain the change (= "USD 2.80") (C12). Then, the cashier gives the change obtained by the POS register terminal 300 to the customer and ends the one-tap checkout processing.

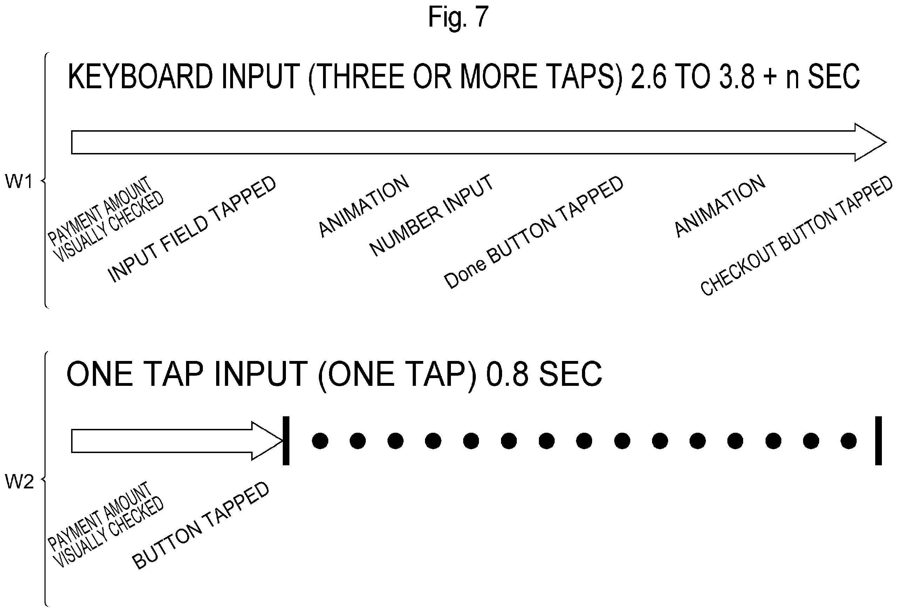

Fig. 7 is a schematic view for illustrating advantageous effects of the one-tap checkout processing. By a conventional method, the payment amount by the customer is directly input (with a keyboard) (see W1), and at least three taps or at least 2.6 to 3.8 + n seconds are necessary for the operation, while by the method according to the embodiment (see W2), it is evident that only one tap or 0.8 seconds are necessary since one candidate payment amount is selected (by one tap input) from a plurality of candidate payment amounts.

According to the above-described embodiment, the "dollar" is a currency by way of illustration, while the invention is applicable to any currency including "yen," "won," and "euro."

According to the embodiment, combinations of bill(s) and coin(s) are described by way of illustration, while the invention is applicable to combinations of only one kind (bills only or coins only).

Furthermore, the POS management server 100 obtains four kinds of candidate payment amounts, while the number of candidate payment amounts needs only be one or more, and the number thereof is not particularly limited.

Meanwhile, the paid amount by the customer may not be in coincidence with any of candidate payment amounts. For example, the customer may hand "USD 100" for the total amount "USD 22.00," and "USD 100" may not be included as a candidate payment amount. The configuration may also be adapted to such a case by allowing the cashier to directly input the paid amount by the customer.

Various priorities may be set as an algorithm for obtaining candidate payment amounts. For example, the candidate payment amount estimating unit 120 may give priority to a candidate payment amount for which the number of bills (or the number of coins) is smaller or to a combination of bills for which a candidate payment amount is closer to the total amount. Furthermore, a situation about money in a country may be taken into account in determining candidate payment amounts. (For example one-dollar bills, five-dollar bills, ten-dollar bills, and twenty-dollar bills are often used but coins are not in the U.S.A.) Candidate payment amounts may be determined in consideration of the fact that customers prefer a nice round number for their change (such as 5 yen, 10 yen, 100 yen, and 500 yen in Japan) in some countries.

### B. Application Example

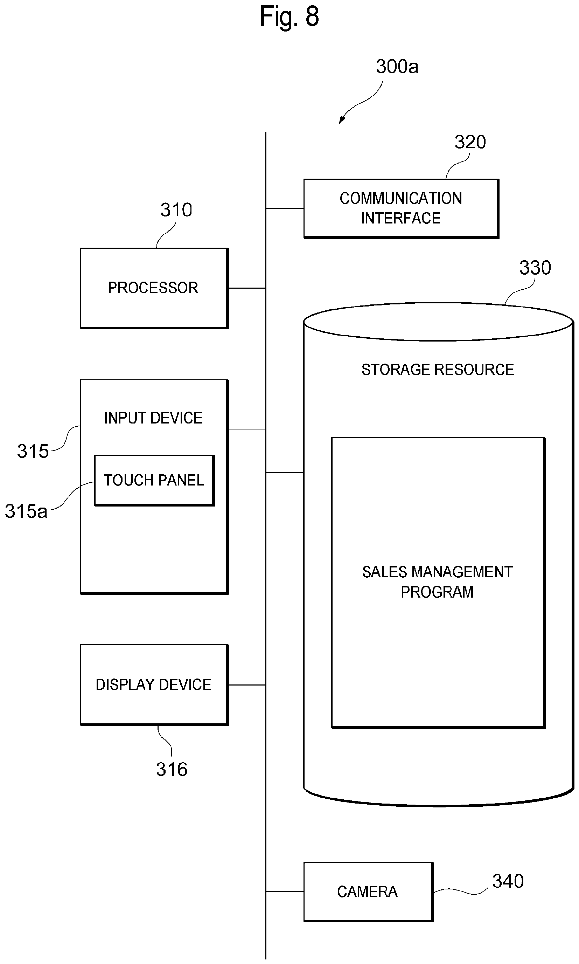

Fig. 8 is a block diagram illustrating a main structure of a POS register terminal 300a according to an application example. The POS register terminal 300a is identical to the POS register terminal 300 shown in Fig. 4 except that the POS register terminal 300a is provided with a camera 340. Therefore, corresponding portions are designated by the same reference characters and their detailed description will not be provided.

The camera (camera unit) 340 includes a CCD sensor or a CMOS sensor and captures an image of money paid by a customer and produces data on the captured money image (money image data). The POS register terminal 300a transmits the money image data to the POS management server 100. The candidate payment amount estimating unit 120 of the POS management server 100 can obtain a more accurate candidate payment amount by using the money image data supplied from the POS register terminal 300a (which will be described in detail).

### <One-tap Checkout Processing>

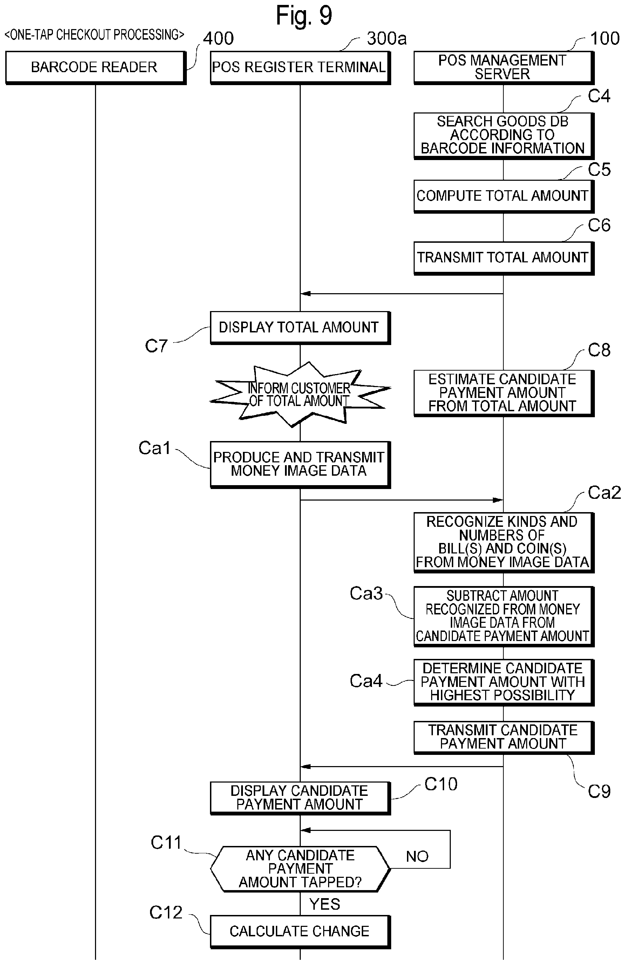

Fig. 9 is a sequence diagram illustrating one-tap checkout processing according to the application example. Note that the portions corresponding to the elements shown in Fig. 5 are designated by the same reference characters and will not be described in detail. Note that in the following description, it is assumed that an item at a price of "USD 8.5" is purchased.

The total amount computing unit 110 of the POS management server 100 searches the goods database 200 using barcode information transmitted from the POS register terminal 300a as a search key (C4), reads out detailed information such as the prices and names of items corresponding to the barcode information, adds up all the prices of the items for which the detailed information has been read out, and obtains a purchase price (total amount: "USD 8.5") (C5). The total amount computing unit 110 of the POS management server 100 transmits the obtained total amount to the POS register terminal 300a (C6). The POS register terminal 300a displays the received total amount on the display device 316 (C7). The cashier informs the customer of that the total amount is "USD 22.20" by referring to the display screen F2 as shown in Fig. 3A. The customer prepares an amount of money corresponding to the total amount (stated differently, an amount of money enough for paying the total amount) and makes a payment in response to the request from the casher.

Meanwhile, the candidate payment amount estimating unit 120 of the POS management server 100 estimates at least one amount of money (an amount obtained as a combination of bill(s) and/or coin(s)) likely to be paid by the customer from the obtained total amount ("USD 8.5" in this example). For example, "USD 8.5," "USD 10," "USD 20," "USD 50," "USD 10.5," and "USD 13.5" are derived as candidate payment amounts (C8).

Meanwhile, the POS register terminal 300a captures an image of money handed by the customer using the camera 340 and produces money image data. More specifically, during the period between the start and end of the payment made by the customer, the image is continuously captured to generate sequential money image data (or moving picture data) and the data is transmitted to the POS management server 100 (Ca1).

The candidate payment amount estimating unit 120 of the POS management server 100 extracts bill(s) (for example a rectangular shape) and coin(s) (for example a disk shape) from the received money image data and recognizes the kinds and the numbers of the bill(s) and coin(s) using mechanical learning such as Deep Learning (Ca2).

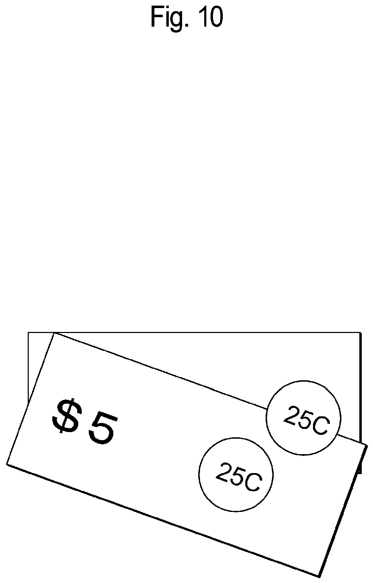

The candidate payment amount estimating unit 120 subtracts the amount of the recognized bill(s) and coin(s) (the amount recognized from the money image data) from the candidate payment amount (Ca3). For example, assume that the total amount for the item is "USD 8.5" and one five-dollar bill, two 25-cent coins, and a rectangular shaped bill the kind of which is unknown are recognized by analysis of the money image data (see Fig. 10).

In this case, considering that the amount recognized from the money image data is "USD 5.5" (= a five dollar bill + a 25-cent coin + a 25-cent coin), the other bill is recognized, and the amount to be paid is "USD 8.5," there is the highest possibility that the other bill is a five-dollar bill. In this case, the candidate payment amount estimating unit 120 determines "USD 10.5" (= a five dollar bill + a five dollar bill + a 25-cent coin + a 25-cent coin) as the candidate payment amount with the highest possibility among the six candidate payment amounts (Ca4). Note that in order to clearly indicate the candidate payment amount with the highest possibility, an index (such as a star mark) may be attached. Naturally, the candidate payment amount estimating unit 120 may estimate a plurality of candidate payment amounts not only on the basis of the total amount but also on the basis of the money image data received from the POS register terminal 300a.

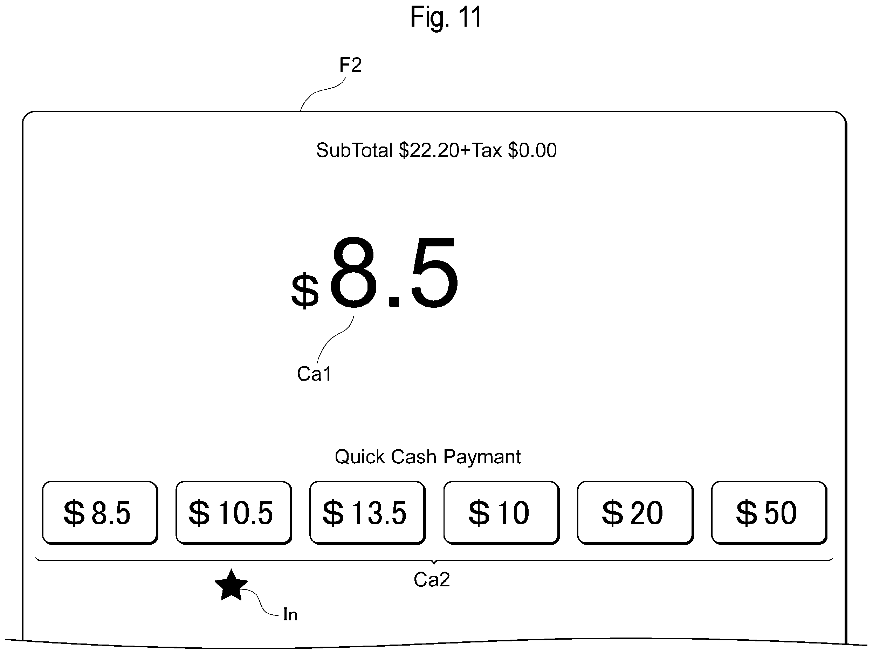

The POS management server 100 returns, to the POS register terminal 300a, the obtained six candidate payment amounts, among which a candidate payment amount with a high possibility is marked with an index such as a star (C9). The POS register terminal 300a displays the six candidate payment amounts received from the POS management server 100 on the display device (display unit) 316 while a candidate payment amount with a high possibility is marked with a star ("USD 10.5" in this example) (C10). As a result, as shown in Fig. 11, the total amount "USD 22.20" is displayed at the space Ca1 at the upper part of the display screen F2, while the six candidate payment amounts "USD 8.5," "USD 10," "USD 20," and "USD 50" and "USD 10.5" and "USD 13.5" both marked with a star In are indicated at the space Ca2 at the lower part of the display screen F3. Note that the plurality of candidate payment amounts may be indicated at the display screen F3 in any manner if the candidate payment amount with the highest possibility can clearly be indicated. For example, the candidate payment amount with the highest possibility may be indicated in a blinking manner, while the other candidate payment amounts may be lighted up normally. The candidate payment amounts may be displayed by buttons in different colors, so that the cashier may be presented with the candidate payment amount with the highest possibility.

While recognizing "USD 10.5" as the candidate payment amount with the highest possibility from the money image data, the cashier roughly checks a combination of a bill(s) and/a coin(s) paid by the customer and finally selects and taps a candidate payment amount in coincidence with the payment amount by the customer. Note that the operation after the selection (tapping) of the candidate payment amount is the same as that described in conjunction with Fig. 5 and therefore will not be described.

As in the foregoing, according to the application example, the image of the money handed by the customer is captured, and the estimation accuracy for the payment amount by the customer can be increased by using the captured image.

### C. Other Cases

The described embodiment and other examples are not intended to limit the present invention, and the present invention may be carried out in various manner without departing from the scope and gist of the invention. Therefore, the above-described embodiment and the other examples are simply illustrative in all respects and should not be construed as limiting. For example, the described processing steps may arbitrarily be changed in the order or carried out in parallel if no discrepancy arises in the content of the processing.

According to the embodiment and the other examples, the POS management server 100 and the POS register terminal 300 are discretely formed, while the POS management server 100 (and the goods database 200) may be provided in the POS register terminal 300 to form an integral configuration. Naturally, part of the functions of the POS management server 100 and the goods database 200 may be provided in the POS register terminal 300. According to the embodiment and the other examples, the items are determined using the barcode reader 400, while this is not intended to limit the invention. The invention may be applied to the case where a cashier directly takes an order from a customer without using a barcode reader and selects and taps a corresponding item from a group of items displayed at the display unit of a handheld terminal for example at a restaurant.

The program for implementing the embodiment and the other examples described above may be recorded on a storage medium. Using the storage medium, the program may be installed in a computer (such as the POS management server 100) configured to manage a POS system 1000. Here, the storage medium having the program stored thereon may be a non-transitory storage medium. The non-transitory storage medium may be a storage medium such as a CD-ROM though not particularly limited.

### Reference Signs List

- 1000: POS system
- 100: POS management server
- 110: Total amount computing unit
- 120: Candidate payment amount estimating unit
- 200: Goods database
- 300, 300a: POS register terminal
- 310: Processor
- 315: Input device
- 315a: Touch panel
- 316: Display device
- 320: Communication interface
- 330: Storage resource
- 340: Camera
- 400: Barcode reader

## Claims

1. A checkout system which presents a purchase price for an item to a customer while accepting input by a cashier of a payment amount by a customer for the purchase price and carries out checkout processing, the checkout system comprising:
a computing unit which computes the purchase price;
a camera unit which captures an image of a combination of money paid by the customer for the purchase price and produces data on the captured money image;
an estimating unit which estimates, according to the purchase price, at least one candidate payment amount likely to be paid by the customer;
a display unit which displays the estimated candidate payment amount;
an accepting unit which accepts input of selection of the candidate payment amount carried out by the cashier; and
a checkout unit which carries out checkout processing on the basis of the purchase price and the input candidate payment amount,
the estimating unit estimating a plurality of the candidate payment amounts on the basis of the purchase price and the data on the captured money image and determining a candidate payment amount with highest possibility on the basis of a combination of money estimated from the data on the captured money image,
the display unit displaying the candidate payment amount with the highest possibility in a different display manner from the rest of candidate payment amounts.

2. A computer-readable recording medium having a control program recorded thereon, the control program being adapted to control a computer which presents a purchase price for an item to a customer while accepting input by a cashier of a payment amount by the customer for the purchase price and carries out checkout processing,
the computer including: a camera which captures an image of a combination of money paid by the customer for the purchase price and produces data on the captured money image; and a display device,
the control program causing the computer to function as:
a computing unit which computes the purchase price;
an estimating unit which estimates, according to the purchase price, at least one candidate payment amount likely to be paid by the customer;
a display unit which displays the estimated candidate payment amount on the display device;
an accepting unit which accepts input of selection of the candidate payment amount carried out by the cashier; and
a checkout unit which carries out checkout processing on the basis of the purchase price and the input candidate payment amount,
the estimating unit estimating a plurality of the candidate payment amounts on the basis of the purchase price and the data on the money image captured by the camera and determining a candidate payment amount with highest possibility on the basis of a combination of money estimated from the data on the captured money image,
the display unit displaying the candidate payment amount with the highest possibility in a different display manner from the rest of candidate payment amounts.

3. A checkout system which presents a purchase price for an item to a customer while accepting input by a cashier of a payment amount by the customer for the purchase price and carries out checkout processing, the checkout system comprising:
a computing unit which computes the purchase price;
an estimating unit which estimates, according to the purchase price, at least one candidate payment amount likely to be paid by the customer;
a display unit which displays the estimated candidate payment amount;
an accepting unit which accepts input of selection of the candidate payment amount carried out by the cashier; and
a checkout unit which carries out checkout processing on the basis of the purchase price and the input candidate payment amount.

4. The checkout system according to claim 3, wherein
the estimating unit estimates a plurality of candidate payment amounts likely to be paid by the customer in consideration of combinations of money, and
the accepting unit accepts input of one of the candidate payment amounts selected by the cashier.

5. The checkout system according to claim 4, wherein the estimating unit preferentially determines a combination of money closer to the purchase price, as the candidate payment amount.

6. The checkout system according to claim 3, further comprising
a camera unit which captures an image of a combination of money paid by the customer for the purchase price and produces data on the captured money image, wherein
the estimating unit estimates the candidate payment amount on the basis of the purchase price and the data on the captured money image.

7. The checkout system according to claim 6, wherein
the estimating unit estimates a plurality of the candidate payment amounts on the basis of the purchase price and the data on the captured money image and determines a candidate payment amount with highest possibility on the basis of a combination of money estimated from the data on the captured money image, and
the display unit displays the candidate payment amount with the highest possibility in a different display manner from the rest of candidate payment amounts.

8. A computer-readable recording medium having a control program recorded thereon, the program being adapted to control a computer which presents a purchase price for an item to a customer while accepting input by a cashier of a payment amount by a customer for the purchase price and carries out checkout processing, the control program causing the computer to function as:
a computing unit which computes the purchase price;
an estimating unit which estimates, according to the purchase price, at least one candidate payment amount likely to be paid by the customer;
a display unit which displays the estimated candidate payment amount;
an accepting unit which accepts input of selection of the candidate payment amount carried out by the cashier; and
a checkout unit which carries out checkout processing on the basis of the purchase price and the input candidate payment amount.
